# EUROPÄISCHE PATENTSCHRIFT

(11) **EP 2 444 145 B1**
(45) Veröffentlichungstag und Bekanntmachung des Hinweises auf die Patenterteilung: **15.03.2017**
(21) Anmeldenummer: 11180591.7
(22) Anmeldetag: 08.09.2011
(51) Int. Cl.: B01D 53/86

(54) **RAUCHGASREINIGUNGSANLAGE MIT MEHRLAGIGEM SCR-KATALYSATOR**
EXHAUST GAS PURIFICATION STAGE WITH MULTI-LAYERED SCR CATALYST
ETAPE DE NETTOYAGE DE GAZ DE FUMÉE AVEC CATALYSEUR MULTI-COUCHES DU TYPE SCR

(30) Priorität: 21.10.2010 DE 102010060104
(43) Veröffentlichungstag der Anmeldung: 25.04.2012
(73) Patentinhaber: Elex Cemcat AG, 8603 Schwerzenbach (CH)
(72) Erfinder: Zurhove, Franz-Josef, 79761 Waldshut-Tiengen (DE)
(74) Vertreter: Tetzner, Michael

(56) Entgegenhaltungen:
- EP-A1- 0 611 594
- EP-A1- 1 579 913
- WO-A1-2005/108891
- WO-A1-2010/073090
- WO-A2-2006/025900
- DE-A1- 4 027 329
- DE-A1- 10 011 327
- JP-A- 57 113 834

## Beschreibung

Die Erfindung betrifft eine Rauchgasreinigungsstufe zur Reinigung von staubhaltigen Abgasen mit einem SCR-Katalysator, der wenigstens drei in Strömungsrichtung der Abgase hintereinander angeordnete Katalysatorlagen aufweist sowie eine Zementherstellungsanlage mit einer solchen Rauchgasreinigungsstufe.

Bei der katalytischen Minderung von Stickoxiden (NOₓ) und flüchtigen organischen Verbindungen (VOC) sind bei hohen Schwefelfrachten im Abgas, wie sie beispielsweise bei Zementherstellungsanlagen anfallen können, Reaktionstemperaturen von wenigstens 260°C erforderlich. Die üblicherweise verwendeten Katalysatoren enthalten als aktives Element Vanadiumpentoxid, wobei mit sinkender Temperatur ein höherer Vanadiumgehalt zur gleichen Schadstoffumsetzung erforderlich ist. Bei Zementherstellungsanlagen ist es aufgrund der Schwefelfrachten in der Regel notwendig, den Katalysator direkt hinter dem Zyklonvorwärmer zu platzieren, da hier prozessbedingt günstigere Temperaturen von etwa 280 bis 400°C vorliegen. Ähnliche Bedingungen ergeben sich beispielweise bei Anlagen zum Calcinieren und Rösten von metallischen Erzen, die ebenfalls mit Zyklonwärmetauschern ausgerüstet sind.

Ungünstigerweise liegen aber nach dem letzten Vorwärmerzyklon hohe Staubbeladungen in der Größenordnung von 30 bis über 180 g/Nm³ vor. Diese hohen Staubfrachten führen zu Betriebsproblemen in Form von Verstopfungen des Katalysators und zur Reduktion der Aktivität der porösen Katalysatoroberfläche durch Staubbeläge.

Bei der Dimensionierung der benötigen Katalysatoroberfläche kommt es im Wesentlichen auf die zu reinigende Gasmenge und den Grad des angestrebten Schadstoffabbaus an. Um das Volumen des Katalysators klein zu halten, wird eine hohe volumenbezogene Katalysatoroberfläche von beispielsweise 300 m²/m³, angestrebt. Der Querschnitt wird durch die vorgegebene Gasgeschwindigkeit in den Katalysatorkanälen und die Gasmenge bestimmt, sodass sich demzufolge eine benötige Gesamtlänge ergibt. Diese lässt sich üblicherweise nicht in einer Lage realisieren, da die Länge sowohl aus verfahrens- als auch fertigungstechnischen Gründen begrenzt ist. Durch kontinuierliche Verbesserungen im Herstellungsprozess werden bei Wabenkatalysatoren mittlerweile Längen von bis zu 1,3 m erreicht. Anlagentechnisch wird es angestrebt, die Gesamtlänge mit möglichst wenigen Lagen zu erreichen, da dadurch die Kosten für Gehäuse, Wartungseinrichtungen und Abreinigung abnehmen. Üblicherweise werden daher mehrere Katalysatorlagen mit einer Länge von mehr als 1 m in das Katalysatorgehäuse eingebracht.

Der Katalysatoreinsatz bei Rauchgasen mit hohen Staubgehalten, wie sie beispielsweise bei der Zementherstellung vorliegen, ist bereits in einer Vielzahl von Veröffentlichungen beschrieben. So wird der Einsatz von Druckluftbläsern zur Abreinigung von Verstopfungen in der DE 100 11 327 A1 dargelegt. In der DE 10 2005 039 997 A1 wird zur Unterstützung der Reinigungsleistung der Staubbläser zusätzlich eine akustische Reinigung mit Schallhörnern vorgeschlagen. In der DE 100 11 327 A1 wird die Abhängigkeit der Verstopfungen und Betriebsstörungen von der Froudezahl dargestellt. Die WO 97/09112 A1 beschreibt ein Verfahren mit vorgeschalteter Schablone, um den Katalysator zu schützen. Die CH 698 991 B1 bezieht sich auf die Kombination aus SCR und SNCR, während die EP 1 735 576 B1 den Abbau von NOₓ mit CO offenbart.

Alle veröffentlichten Verfahren konnten jedoch Betriebsstörungen aufgrund hoher Staubbeladungen und/oder sehr kohäsivem Staub bisher nicht zufriedenstellend reduzieren. In der WO 2010015009 und der WO 2010073090 sind daher SCR-Katalysatoren mit einer Vorentstaubung zur Reduktion des Staubgehaltes vorgeschlagen worden.

Da die Heißentstaubung aber einen erheblichen Mehraufwand beinhaltet, liegt der vorliegenden Erfindung die Aufgabe zugrunde, eine Rauchgasreinigungsstufe zu entwickeln, die einen störungsfreien Betrieb von Katalysatoren auch bei hohen Staubbeladungen ermöglicht.

Erfindungsgemäß wird diese Aufgabe durch die Merkmale des Anspruches 1 gelöst.

Die erfindungsgemäße Rauchgasreinigungsstufe zur Reinigung von staubhaltigen Abgasen weist einen SCR-Katalysator zur NOₓ-Reduktion auf, der wenigstens drei in Strömungsrichtung der Abgase hintereinander angeordnete Katalysatorlagen vorsieht, wobei die in Strömungsrichtung erste Katalysatorlage eine geringere Länge aufweist als die folgenden Lagen.

Bei den der Erfindung zugrundeliegenden Versuchen und im Industriebetrieb hat sich gezeigt, dass Staubablagerungen in den Kanälen der einzelnen Katalysatorlagen mit hohen Druckverlusten einhergehen. Die Ablagerungen führen zu einem erhöhten Widerstand gegen Durchströmung, was besonders bei der Abreinigung mit Druckluft die erreichbare Geschwindigkeit in den Kanälen verringert. Dadurch nimmt die Abreinigungsleistung ab und es entsteht in der Folge ein Brückenwachstum in den Katalysatorkanälen, bis die Kanäle schließlich vollkommen durch Staub verschlossen werden. Diese Staubbrücken können ab einer bestimmten Größe nicht mehr mittels Druckluft abgereinigt werden.

Des Weiteren wurde beobachtet, dass die Katalysatorlagen im Reaktorgehäuse aufgrund Ihrer Geometrie eine Gleichrichtung der Strömung und eine Vergleichmäßigung der Staubfracht bewirken. Der Durchströmungswiderstand einer Lage erzeugt eine von der Gasgeschwindigkeit abhängige Druckdifferenz und infolgedessen auch eine Homogenisierung der Geschwindigkeitsbeträge über den Querschnitt. Dieser Effekt der Gleichrichtung und Homogenisierung ist jedoch erst in der Anströmung der zweiten Katalysatorlagen vorhanden. Eine ungleichmäßige Anströmung, wie sie in der ersten Katalysatorlage erfolgt, führt aufgrund hoher lokaler Staubkonzentrationen und lokaler Geschwindigkeitsgradienten zu einer ansteigenden Gefahr der Brückenbildung in den Katalysatorkanälen. Diese Brückenbildungen der ersten Lagen nehmen hierdurch deutlich schneller zu als bei den folgenden Lagen.

Es gibt bereits verschiedene Versuche und Konstruktionen eine homogene Verteilung bereits vor der ersten Katalysatorlage zu erzielen. Hierzu gehören unter anderem Leitbleche und eine Dummy-Lage. Diese haben in der Praxis aber nicht dazu geführt, dass die oberste Katalysatorlage genauso mit vergleichbaren Druckverlusten läuft wie die folgenden. Dies wird insbesondere darauf zurückgeführt, dass die Dummy-Lagen deutlich geringere Widerstände aufweisen und daher keine gleichwertige Wirkung haben. Außerdem stellen sie einen zusätzlichen Aufwand in der Herstellung und bei der Abreinigung dar, ohne eine schadstoffmindernde Wirkung zu haben. Durch die erfindungsgemäße Maßnahme, dass die in Strömungsrichtung erste Katalysatorlage eine geringere Länge aufweist als die folgenden Lagen, konnte der Betrieb der Rauchgasreinigungsstufe wesentlich optimiert werden.

Weitere Ausgestaltungen der Erfindung sind Gegenstand der Unteransprüche.

Gemäß einer bevorzugten Ausgestaltung der Erfindung beträgt das Verhältnis der kürzesten zur längsten Katalysatorlage weniger als 0,7, vorzugsweise weniger als 0,5. Außerdem hat es sich als vorteilhaft herausgestellt, wenn die erste Katalysatorlage eine Länge aufweist, die der Länge der sich aufgrund der durchströmenden Abgase ergebenden Einlaufturbulenz +/- 25% entspricht.

Gemäß einer weiteren Ausgestaltung der Erfindung weist die erste Katalysatorlage einen größeren Pitch als die folgenden Lagen auf. Typischerweise werden in der Zementindustrie Katalysatorelemente zwischen 10 x 10 und 18 x 18 Kanälen auf 150 mm x 150 mm eingesetzt. Durch den Einsatz von beispielsweise 8 x 8 Elementen in der ersten Lage kann die Verstopfungsgefahr in diesem Bereich weiter reduziert werden. Mit steigender Anzahl durchströmter Lagen erfolgt die Vergleichmäßigung der Strömung, sodass in der dritten Lage beispielsweise 13x13 Elemente verwendet werden können.

Bei den der Erfindung zugrundeliegenden Versuchen hat es ich außerdem als vorteilhaft erwiesen, wenn die erste Katalysatorlage als Plattenkatalysator und die folgenden Lagen als Wabenkatalysator ausgebildet sind.

Die spezifische Oberfläche des Katalysators besitzt neben dem Reduktionspotential für NOₓ auch oxidative Eigenschaften für einige Schadstoffe. So werden Kohlenwasserstoffe unterschiedliche Kettenlänge mit Sauerstoff oxidiert. Sowohl die NOₓ-Reduktion als auch die VOC-Oxidation steigen mit dem Vanadiumpentoxidgehalt des Katalysators. Neben dem Vanadiumpentoxidgehalt hat der Stofftransport der Schadstoffe zu den aktiven Zentren des Katalysators entscheidenden Einfluss auf den Umsatz.

In den Katalysatorkanälen herrscht bei typischen Gasgeschwindigkeiten von 5 m/s ein laminarer Strömungsverlauf. Lediglich im Eintrittsbereich des Katalysators treten Verwirbelungen und somit turbulente Verhältnisse auf. Nach Binder-Bergsteiger et. al., "Zur Kinetik der Denox-Reaktion an TiO2/WO3-Wabenkatalysatoren", Chemie Ingenieur Technik Vol. 62, S. 60-61, Januar 1990, gilt die folgende Formel:
Länge der Einlaufturbulenz = 0,03 * Reynoldszahl * hydraulischer Durchmesser

Es hat sich aber gezeigt, dass turbulente Verhältnisse, wie im Einlaufbereich des Katalysators zu einem verbesserten Stofftransport führen.

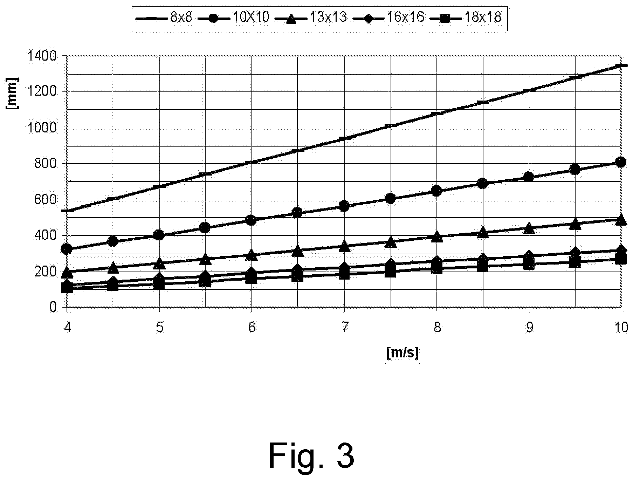

In Fig. 3 ist die Länge der Einlaufturbulenz in Abhängigkeit der Geschwindigkeit und der Zellzahl aufgetragen. Es ergeben sich Einlaufturbulenten in einer Länge zwischen 100 und 1400 mm, wobei turbulente Strecken größer 500 mm nur bei hohen Strömungsgeschwindigkeiten und somit hohen Druckverlusten und gleichzeitig kleiner Zellenzahl auftreten, bei denen aufgrund der geringeren spezifischen Oberfläche ein sehr viel höheres Katalysatorvolumen erforderlich ist.

Bei typischen Betriebsbedingungen von 5 m/s und einer Zellzahl 10 x 10 ist die Einlassturbulenz etwa in den ersten 400 mm vorhanden. Katalysatorlängen von 1200 mm haben daher einen geringeren Schadstoffumsatz als eine Aufteilung des gleichen Volumens in drei Elementen mit jeweils 400 mm. Für einen hohen Schadstoffabbau empfiehlt es sich daher, das Katalysatorvolumen in diesem Fall mit Elementen einer Länge von 400 mm aufzuteilen und eine höhere Anzahl von Lagen zur Verfügung zu stellen. Da jede Katalysatorlage jedoch eine eigene Reinigungsvorrichtung in Form eines Staubbläsers besitzt, wird hierdurch der Anlagenaufwand erhöht. Damit der Anlagenaufwand jedoch nicht unverhältnismäßig ansteigt, ist es erfindungsgemäß vorgesehen, dass die erste Katalysatorlage eine geringere Länge aufweist, als die folgenden Lagen. Durch die verkürzte erste Katalysatorlage wird eine homogenere Staub- und Strömungsverteilung erzeugt, die geringere Staubablagerungsspitzen und infolgedessen geringere Druckverluste in den nachfolgenden Lagen verursacht. Darüber hinaus kann der VOC-Umsatz in der ersten Katalysatorlage durch die Einlaufturbulenzen gesteigert werden.

Zur NOₓ-Reduktion ist eine Zuführeinrichtung für Ammoniak oder ein ammoniakhaltiges Reduktionsmittel erforderlich. Die Zuführung erfolgt zweckmäßig bereits vor dem Katalysator. In einer optionalen Ausgestaltung der Erfindung ist es möglich, die Zuführung erst nach der ersten Lage durchzuführen, damit in der ersten Katalysatorlage im Wesentlichen die VOC-Oxidation und nicht gleichzeitig die Reduktion von NOₓ stattfindet.

In anderen Industriezweigen, wie der Lösemittelbranche, werden zur VOC-Minderung auch sogenannte Oxidationskatalysatoren eingesetzt, die zur verbesserten Oxidation beispielsweise mit Edelmetallen dotiert sind. In der Praxis hat sich jedoch gezeigt, dass die spezifische Zusammensetzung des Abgases und die Staubfracht, wie sie insbesondere bei der Zementherstellung entsteht, zu einer schnellen Deaktivierung dieser Katalysatoren führen kann. Es ist aber durchaus denkbar, dass eine Weiterentwicklung der Technologie der Oxidationskatalysatoren den Einsatz in Zukunft auch in der verkürzten ersten Lage ermöglicht.

Weitere Ausgestaltungen und Vorteile der Erfindung werden im Folgenden anhand der weiteren Beschreibung und der Zeichnung erläutert.

### In der Zeichnung zeigen

- Fig. 1: ein schematisches Blockschaltbild einer Zementherstellungsanlage,
- Fig. 2: eine schematische Detaildarstellung der Fig. 1 im Bereich des Vorwärmers und der Rauchgasreinigungsstufe,
- Fig. 3: Diagramm des Zusammenhangs zwischen Länge der Einlaufturbulenz und der Gasgeschwindigkeit und der Zellzahl einer Katalysatoreinheit,
- Fig. 4: eine Draufsicht einer Katalysatoreinheit der ersten Katalysatorlage gemäß einem ersten Ausführungsbeispiel,
- Fig. 5: eine Draufsicht einer Katalysatoreinheit der ersten Katalysatorlage gemäß einem zweiten Ausführungsbeispiel,
- Fig. 6: eine Draufsicht einer Katalysatoreinheit einer nachfolgend angeordneten Katalysatorlage.

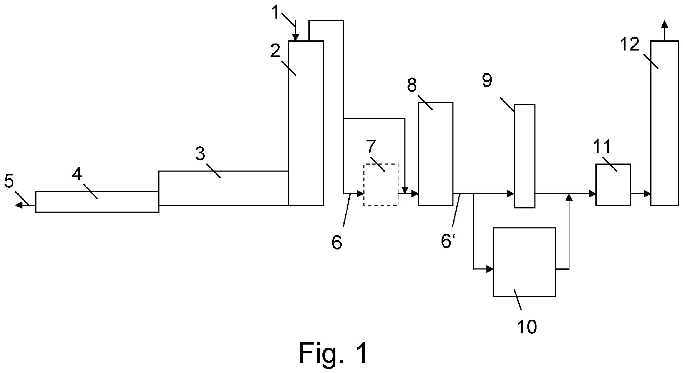

Bei der in Fig. 1 dargestellten Zementherstellungsanlage wird Rohmehl 1 einem Vorwärmer 2 zum Vorwärmen des Rohmehls zugeführt. Das vorgewärmte Rohmehl gelangt dann zum Brennen in einen Ofen 3. Das gebrannte Gut wird anschließend in einem Kühler 4 gekühlt und als Zementklinker 5 abgezogen.

Die im Ofen 3 und einem ggf. zwischen Vorwärmer und Ofen angeordneten Calcinator entstehenden Abgase werden in Vorwärmer 2 zum Vorwärmen des Rohmehls 1 verwendet. Das staubhaltige Abgas verlässt den Vorwärmer 2 mit einer Temperatur von etwa 280 bis 400°C und wird direkt oder über eine Vorentstaubungseinrichtung 7 einer Rauchgasreinigungsstufe 8 zugeführt.

Die Vorentstaubungseinrichtung 7 ist beispielsweise als Heißgasentstauber ausgebildet und soll den Staubgehalt des Abgases 6 auf beispielsweise 1 bis 20 g/Nm³ reduzieren. Je nach Staubgehalt des Abgases 6 des Vorwärmers 2 kann aber unter Umständen auch auf die Vorentstaubungseinrichtung 7 verzichtet werden.

Das die Rauchgasreinigungsstufe 8 verlassende Abgas 6' wird wahlweise in einem Kühlturm 9 gekühlt oder in einer Mahltrocknungseinrichtung 10 genutzt, bevor es im Staubfilter 11 entstaubt und über einen Kamin 12 in die Atmosphäre gelangt.

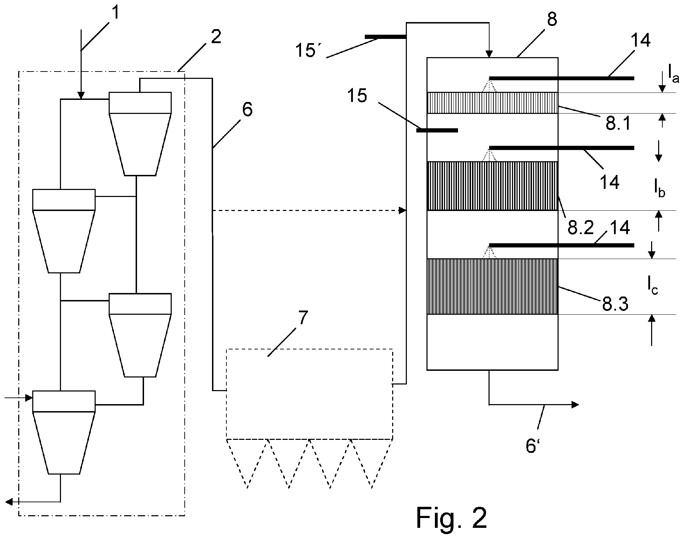

In Fig. 2 sind der Vorwärmer 2, die Vorentstaubungseinrichtung 7 und die Rauchgasreinigungsstufe 8 etwas detaillierter dargestellt.

Der Vorwärmer 2 ist in üblicherweise als mehrstufiger Zyklonvorwärmer ausgebildet, wobei die Ofenabgase im Gegenstrom zum vorzuwärmenden Rohmehl 1 durch den Vorwärmer geleitet werden.

Die Rauchgasreinigungsstufe 8 sieht einen SCR- Katalysator vor, der im dargestellten Ausführungsbeispiel drei in Strömungsrichtung der Abgase hintereinander angeordnete Katalysatorlagen 8.1, 8.2, 8.3 vor, wobei die in Strömungsrichtung erste Katalysatorlage 8.1 weist eine geringere Länge lₐ als die Längen l_{b}, l_{c} der folgenden Lagen 8.2, 8.3 auf. Im dargestellten Ausführungsbeispiel ist die Länge l_{c} der dritten Katalysatorlage 8.3 länger als die Länge l_{b} der zweiten Katalysatorlage 8.2. Im Rahmen der Erfindung ist es aber durchaus denkbar, dass lediglich die erste Lage verkürzt ist, während die nachfolgenden Katalysatorlagen gleiche Längen aufweisen. Gemäß einer bevorzugten Ausgestaltung beträgt das Verhältnis lₐ/l_{c} der kürzesten zur längsten Katalysatorlage weniger als 0,7, vorzugsweise weniger als 0,5. Weiterhin hat es sich als vorteilhaft erwiesen, wenn die Länge lₐ der ersten Katalysatorlage 8.1 der Länge der sich aufgrund des durchströmenden Abgases 6 ergebenen Einlaufturbulenz +/- 25% entspricht. Zur Berechnung dieser Länge wird auf die oben angegebene Formel und Fig. 3 verwiesen.

Mit einer solchen Dimensionierung kommt es in der ersten Katalysatorlage im Wesentlichen zu einer VOC-Oxidation, die bevorzugt im Bereich der Einlaufturbulenz abläuft.

Zur NOₓ-Reduktion ist eine Zuführeinrichtung 15, 15' für Ammoniak oder ein ammoniakhaltiges Reduktionsmittel erforderlich. Die Zuführung kann bereits vor dem Katalysator erfolgen (Zuführeinrichtung 15'). In einer optionalen Ausgestaltung der Erfindung, ist es möglich, die Zuführung über eine Zuführeinrichtung 15 erst nach der ersten Katalysatorlage 8.1 durchzuführen, damit in der ersten Katalysatorlage im Wesentlichen die VOC-Oxidation und nicht gleichzeitig die Reduktion von NOₓ stattfindet.

Jede Katalysatorlage kann darüber hinaus auch mit Staubbläsern 14 oder anderen geeigneten Reinigungseinrichtungen zur Entfernung von Staubablagerungen am SCR-Katalysator versehen werden.

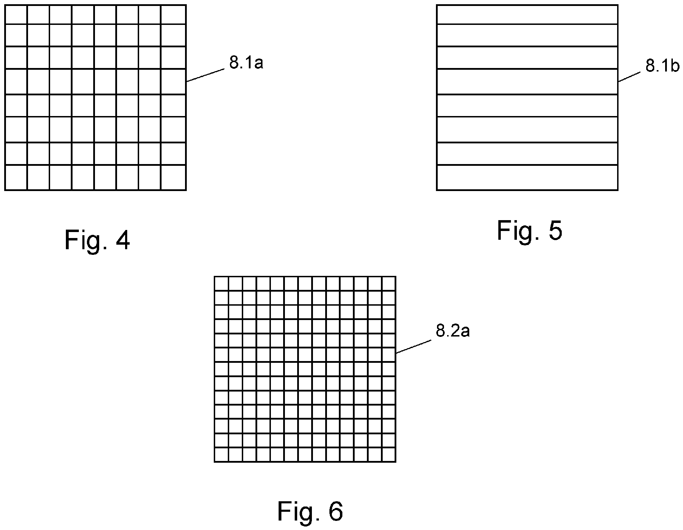

Fig. 4 zeigt eine Draufsicht auf ein Katalysatorelement 8.1a, dass beispielsweise eine Abmessung von 150mm * 150mm aufweist. Die gesamte Katalysatorlage 8.1 besteht beispielsweise aus 72 derartigen Katalysatorelemente 8.1a, die in so genannten Modulkästen zusammengefasst sind. Bei dem in Fig. 4 dargestellten Katalysatorelement handelt es sich um einen Wabenkatalysator, der eine Kanalanzahl von 8 * 8 aufweist.

Als Alternative kommt insbesondere für die erste Katalysatorlage 8.1 auch ein Plattenkatalysator in Betracht. Ein entsprechendes Plattenkatalysatorelement 8.1b ist in Fig. 5 dargestellt. Für die nachfolgenden Katalysatorlagen 8.2 und 8.3 kommen vorzugsweise Wabenkatalysatoren in Betracht, da diese eine größere Wirkfläche pro Volumen aufweisen. Nachdem die Abgasströmung bei den nachfolgenden Lagen bereits homogener ist und daher dort auch die Neigung zu Staubablagerungen entsprechend reduziert ist, kann der Pitch verringert, bzw. die Kanalanzahl entsprechend vergrößert werden. So ist in Fig. 6 beispielhaft ein Katalysatorelement 8.2a mit 13x13 Kanälen dargestellt.

Bei den der Erfindung zugrundeliegenden Versuchen hat sich gezeigt, dass allein durch die verkürzte erste Katalysatorlage 8.1 die Neigung zur Verstopfungen durch Staubablagerungen deutlich reduziert werden konnten. Verstärkt wird dieser Effekt durch die weitere Maßnahme, dass bei der ersten Katalysatorlage ein größerer Pitch, d. h. im Querschnitt größere Kanäle, als in den nachfolgenden Lagen verwendet werden.

## Patentansprüche

1. Rauchgasreinigungsstufe (8) zur Reinigung von staubhaltigen Abgasen (6, 6') mit einem SCR-Katalysator zur NOₓ-Reduktion, der wenigstens drei in Strömungsrichtung der Abgase hintereinander angeordnete Katalysatorlagen (8.1, 8.2, 8.3) aufweist,
**dadurch gekennzeichnet, dass** die in Strömungsrichtung erste Katalysatorlage (8.1) eine geringere Länge aufweist als die folgenden Lagen (8.2, 8.3).

2. Rauchgasreinigungsstufe nach Anspruch 1, **gekennzeichnet durch** eine Zuführeinrichtung (15, 15') für Ammoniak oder ein ammoniakhaltiges Reduktionsmittel

3. Rauchgasreinigungsstufe nach Anspruch 1, **dadurch gekennzeichnet, dass** das Verhältnis (lₐ/l_{c},) der kürzesten zur längsten Katalysatorlage (8.1, 8.3) kleiner als 0.7 ist.

4. Rauchgasreinigungsstufe nach Anspruch 1, **dadurch gekennzeichnet, dass** das Verhältnis (lₐ/l_{c},) der kürzesten zur längsten Katalysatorlage (8.1, 8.3) kleiner als 0.5, ist.

5. Rauchgasreinigungsstufe nach Anspruch 1, **dadurch gekennzeichnet, dass** insbesondere die erste Katalysatorlage (8.1) eine Länge (lₐ) aufweist, die der Länge der sich aufgrund der durchströmenden Abgase ergebenden Einlaufturbulenz plus/minus 25% entspricht.

6. Rauchgasreinigungsstufe nach Anspruch 1, **dadurch gekennzeichnet, dass** wenigstens die erste Katalysatorlage (8.1) einen größeren Pitch aufweist, als die folgenden Lagen (8.2, 8.3).

7. Rauchgasreinigungsstufe nach Anspruch 1, **dadurch gekennzeichnet, dass** die verkürzte erste Katalysatorlage (8.1) als Plattenkatalysator und die folgenden Lagen als Wabenkatalysator ausgebildet sind.

8. Rauchgasreinigungsstufe nach Anspruch 1, **dadurch gekennzeichnet, dass** eine Zuführeinrichtung (15) für Ammoniak oder ein ammoniakhaltiges Reduktionsmittel in Strömungsrichtung erst nach der ersten Katalysatorlage (8.1) angeordnet ist.

9. Rauchgasreinigungsstufe nach Anspruch 1, **dadurch gekennzeichnet, dass** wenigstens die erste Katalysatorlage (8.1) durch einen Oxidationskatalysator gebildet wird.

10. Zementherstellungsanlage mit einem Vorwärmer (2) zum Vorwärmen von Rohmaterial (1), einem Ofen (3) zum Brennen des Rohmaterials und einem Kühler zum Kühlen (4) des gebrannten Rohmaterials, wobei die Abgase des Ofens (3) im Vorwärmer (2) genutzt werden, und wobei sich in Strömungsrichtung der Abgase (6) nach dem Vorwärmer (2) eine Rauchgasreinigungsstufe (8) gemäß einem oder mehreren der vorhergehenden Ansprüche anschließt.

## Claims

1. Flue gas cleaning stage (8) for cleaning dust-laden exhaust gases (6, 6') with an SCR catalytic convertor for NOₓ reduction, which has at least three catalytic convertor layers (8.1, 8.2, 8.3) which are arranged one behind the other in the flow direction of the exhaust gases, **characterised in that** the first catalytic convertor layer (8.1) in the flow direction has a shorter length than the following layers (8.2, 8.3).

2. Flue gas cleaning stage according to claim 1, **characterised by** a supply device (15, 15') for ammonia or an ammonia-containing reduction agent.

3. Flue gas cleaning stage according to claim 1, **characterised in that** the relationship (lₐ/l_{c}) of the shortest to the longest catalytic convertor layer (8.1, 8.3) is less than 0.7.

4. Flue gas cleaning stage according to claim 1, **characterised in that** the relationship (lₐ/l_{c}) of the shortest to the longest catalytic convertor layer (8.1, 8.3) is less than 0.5.

5. Flue gas cleaning stage according to claim 1, **characterised in that** particularly the first catalytic convertor layer (8.1) has a length (lₐ) which corresponds to the length of the influx turbulence which is produced owing to the exhaust gases passing through plus/minus 25%.

6. Flue gas cleaning stage according to claim 1, **characterised in that** at least the first catalytic convertor layer (8.1) has a larger pitch than the following layers (8.2, 8.3).

7. Flue gas cleaning stage according to claim 1, **characterised in that** the shortened first catalytic convertor layer (8.1) is formed as a plate-type catalytic convertor and the following layers are formed as a honeycomb-type catalytic convertor.

8. Flue gas cleaning stage according to claim 1, **characterised in that** a supply device (15) for ammonia or an ammonia-containing reduction means is arranged in the flow direction only downstream of the first catalytic converter layer (8.1).

9. Flue gas cleaning stage according to claim 1, **characterised in that** at least the first catalytic convertor layer (8.1) is formed by an oxidation catalytic converter.

10. Cement production plant having a preheater (2) for preheating raw material (1), an oven (3) for baking the raw material and a cooler for cooling (4) the baked raw material, the exhaust gases of the oven (3) being used in the preheater (2) and a flue gas cleaning stage (8) adjoining in the flow direction of the exhaust gases (6) downstream of the preheater (2) according to one or more of the preceding claims.

## Revendications

1. Etage d'épuration des gaz de fumées (8) servant à l'épuration des gaz brûlés (6, 6') contenant des poussières, avec un catalyseur du type à réduction catalytique sélective (RCS) pour la réduction de NOₓ, catalyseur RCS qui comprend au moins trois couches de catalyseur (8.1, 8.2, 8.3) disposées les unes derrière les autres dans la direction de circulation des gaz brûlés,
**caractérisé en ce que** la première couche de catalyseur (8.1) présente, dans la direction de circulation, une longueur plus petite que celle des couches suivantes (8.2, 8.3).

2. Etage d'épuration des gaz de fumées selon la revendication 1, **caractérisé par** un dispositif d'alimentation (15, 15') pour de l'ammoniac ou pour un agent de réduction contenant de l'ammoniac.

3. Etage d'épuration des gaz de fumées selon la revendication 1, **caractérisé en ce que** le rapport (lₐ/l_{c}) de la couche de catalyseur la plus courte (8.1), relativement à la couche de catalyseur la plus longue (8.3), est inférieur à 0,7.

4. Etage d'épuration des gaz de fumées selon la revendication 1, **caractérisé en ce que** le rapport (lₐ/l_{c}) de la couche de catalyseur la plus courte (8.1), relativement à la couche de catalyseur la plus longue (8.3), est inférieur à 0,5.

5. Etage d'épuration des gaz de fumées selon la revendication 1, **caractérisé en ce que** la première couche de catalyseur (8.1), en particulier, présente une longueur (la) qui correspond, suivant une variation de 25 % en plus ou en moins, à la longueur des turbulences d'entrée se produisant en raison des gaz brûlés qui sont en circulation.

6. Etage d'épuration des gaz de fumées selon la revendication 1, **caractérisé en ce qu'**au moins la première couche de catalyseur (8.1) présente un écartement plus grand que celui des couches suivantes (8.2, 8.3).

7. Etage d'épuration des gaz de fumées selon la revendication 1, **caractérisé en ce que** la première couche de catalyseur la plus courte (8.1) est configurée comme un catalyseur à plaque, les couches suivantes étant configurées comme un catalyseur en nid d'abeilles.

8. Etage d'épuration des gaz de fumées selon la revendication 1, **caractérisé en ce qu'**un dispositif d'alimentation (15) pour de l'ammoniac ou pour un agent de réduction contenant de l'ammoniac est disposé, dans la direction de circulation, seulement en aval de la première couche de catalyseur (8.1).

9. Etage d'épuration des gaz de fumées selon la revendication 1, **caractérisé en ce qu'**au moins la première couche de catalyseur (8.1) est formée par un catalyseur d'oxydation.

10. Usine de fabrication de ciment comprenant un préchauffeur (2) servant au préchauffage de la matière première (1), comprenant un four (3) servant à la calcination de la matière première et comprenant un refroidisseur servant au refroidissement (4) de la matière première calcinée, où les gaz brûlés du four (3) sont utilisés dans le préchauffeur (2), et où un étage d'épuration des gaz de fumées (8) selon l'une quelconque ou plusieurs des revendications précédentes est raccordé, dans la direction de circulation des gaz brûlés (6), en aval du préchauffeur (2).
